# FASCICULE DE BREVET EUROPEEN

(11) **EP 0 442 817 B1**
(45) Date de publication et mention de la délivrance du brevet: **18.08.1993**
(21) Numéro de dépôt: 91400385.0
(22) Date de dépôt: 14.02.1991
(51) Int. Cl.: A23B 7/08, A23G 3/00

(54) **Procédé de fabrication de fruits semi-confits aromatisés et produits obtenus**
Herstellungsverfahren für aromatisierte halbkandierte Früchte und so hergestellte Produkte
Manufacture process for aromatized semi-candied fruits and products thus obtained

(30) Priorité: 15.02.1990 FR 9001831
(43) Date de publication de la demande: 21.08.1991
(73) Titulaire: MARIE BRIZARD ET ROGER INTERNATIONAL S.A., F-33000 Bordeaux (FR); Breton, Lucien, F-16230 ARS (FR)
(72) Inventeur: Breton, Lucien, F-16130 ARS (FR)
(74) Mandataire: Durand, Yves Armand Louis

(56) Documents cités:
- FR-A- 1 592 602
- FR-A- 2 069 929
- FR-A- 2 140 949
- FR-A- 2 563 415
- US-A- 4 156 023
- DERWENT FILE SUPPLIER WPI/L, no. 82-11291E, 1982, Derwent Publications Ltd., Londres (GB)#
- DERWENT FILE SUPPLIER JAPS, Patent Office of Japan, Tokyo (JP)#

## Description

La présente invention a pour objet un nouveau procédé de fabrication de fruits semi-confits aromatisés.

Elle a également pour objet le produit en résultant, formé de fruits semi-confits aromatisés dans un sirop alcoolisé.

Ce produit peut être directement utilisé dans les préparations alimentaires, artisanales et industrielles, telles que les pâtisseries, les crèmes, les entremets et les crèmes glacées. Il peut être également consommé directement.

La fabrication de fruits confits est bien connue dans l'art. De plus, un procédé de stabilisation de parfums alcoolisés dans les fruits confits a été proposé par la société Fauque dans la demande de brevet français N° 2 563 415. Ce procédé consiste à faire macérer les fruits confits ou secs dans de l'alcool parfumé à froid en milieu ouvert, puis à ajouter de la xanthane et de la farine de graines de Guar dans l'alcool résiduel provenant de la macération des fruits, à température ambiante. Par fermentation, la xanthane et la farine de graines de Guar forment un film ou un gel enrobant chaque morceau de fruit ou fruit.

Ce procédé présente de nombreux inconvénients. En effet, il est nécessaire notamment d'utiliser une quantité importante d'alcool, c'est-à-dire une quantité au moins équivalente en poids à celle des fruits. Par ailleurs, une dilution du suc des fruits dans l'alcool a toujours lieu pendant l'étape de macération. De plus, le produit final obtenu est peu pratique d'emploi. L'alcool a en effet pénétré à l'intérieur du fruit tandis que le sucre et le gel sont à l'extérieur des fruits qui de ce fait deviennent très adhésifs et collent entre eux. Ils sont donc très difficiles à répartir par la suite dans les différentes préparations alimentaires, notamment dans les pâtes pour la pâtisserie, et dans les crèmes glacées pour la confection des glaces. Enfin, il a été observé que les fruits confits obtenus par ce procédé ne sont pas toujours stables dans le temps.

L'invention a pour objet de pallier les inconvénients mentionnés ci-dessus en proposant un nouveau procédé de préparation de fruits semi-confits aromatisés en un nombre d'étapes réduit, dans un même récipient, très rapide, sans perte d'alcool et ayant pour principal avantage de pouvoir doser les quantités d'alcool en fonction des besoins et non pas en fonction de la quantité de fruits. Ceci a pour conséquence directe d'obtenir un gain en matières premières.

Le produit obtenu est quant à lui idéal pour une utilisation dans la production de produits alimentaires: pâtisseries, crèmes, glaces et autres. Les fruits ne présentant pas de gel ou de film en surface, ni de sucre, se détachent très bien les uns des autres. Et de par la viscosité du sirop alcoolisé présent à l'intérieur des fruits, ce sirop ne diffuse pas dans les pâtes et les crèmes glacées lorsque les fruits sont incorporés dans les préparations alimentaires. Enfin, ce type de produit à base de fruits semi-confits se conserve très bien à température ambiante pour une durée d'eau moins trois ans, en gardant toutes ses propriétés gustatives, en particulier ses arômes, le contenant ou récipient étant hermétique.

Le procédé de fabrication de fruits semi-confits aromatisés selon l'invention consiste à:
a) mélanger un sirop alcoolisé avec des fruits ou des morceaux de fruits dans un récipient;
b) soumettre le récipient fermé hermétiquement à une montée progressive en température jusqu'à environ 40°C;
c) maintenir le récipient à une température d'au moins environ 40°C, pendant au moins quatre heures; et
d) le cas échéant, soumettre à un traitement de pasteurisation ou de stérilisation, les étapes c) et d) précitées pouvant être inverties.

Une caractéristique avantageuse de l'invention est la durée de l'étape b) d'au moins deux heures.

Selon une autre caractéristique avantageuse de l'invention, lorsque la température de l'étape c) est inférieure à 65°C, l'étape d) est un traitement de pasteurisation et a une durée d'au moins environ une heure.

Selon une autre caractéristique avantageuse de l'invention, lorsque la température de l'étape c) est supérieure à 65°C, l'étape d) n'est pas nécessaire.

Selon encore une autre caractéristique avantageuse de l'invention, l'étape d) est une stérilisation qui est précédée ou suivie par l'étape c).

Enfin, selon une autre caractéristique avantageuse de l'invention, le sirop alcoolisé est préparé en mélangeant à chaud un sirop de sucre et un gel d'alcool comprenant un agent épaississant, de préférence l'amidon ou le carboxy-méthyl cellulose et un alcool de 2 à 15°.

Le sirop de sucre est de préférence à base de fructose.

L'invention a également pour objet le produit obtenu par ce procédé.

L'invention sera mieux comprise à la lecture de la description explicative qui va suivre, avec en illustration différents modes de réalisation de l'invention.

Le diagramme schématique qui suit illustre le procédé selon l'invention.

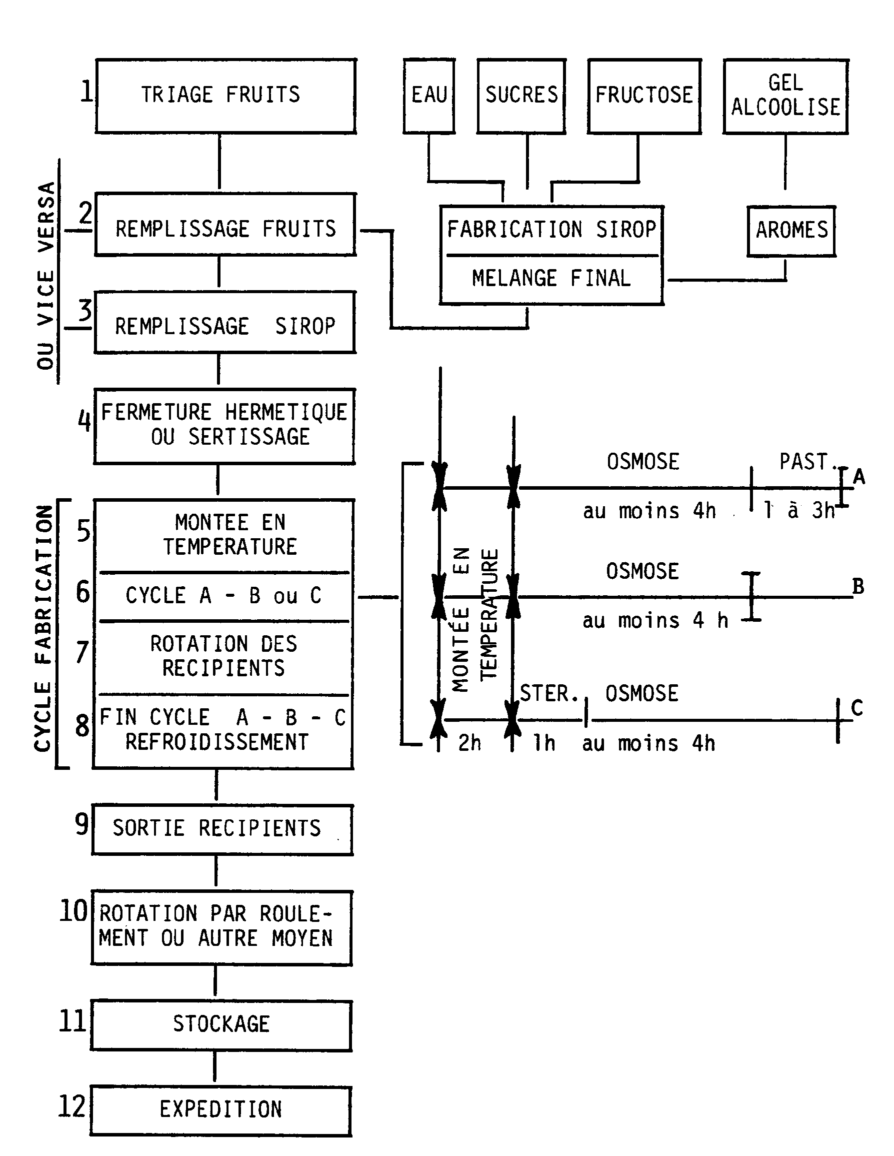

L'invention réside dans le fait de faire subir aux fruits un traitement à la chaleur qui, d'une part permet une pasteurisation ou une stérilisation et qui, d'autre part, entraîne un phénomène d'osmose entre le sirop alcoolisé et les fruits au niveau de la membrane de ces derniers. Ainsi, au cours d'un palier où la température est maintenue pendant une période de temps d'au moins quatre heures, l'opération de confisage des fruits se réalise et au cours d'un palier où la température est plus élevée, a lieu proprement dit la pasteurisation ou la stérilisation.

Le procédé selon l'invention peut se dérouler de la façon suivante.

Comme produit de départ, des fruits tels que des raisins secs ou des morceaux de fruits tels que des morceaux de pommes, poires ou bananes sous une forme sèche, déshydratée ou lyophilisée ou encore des fruits confits partiellement, peuvent être utilisés. Des fruits issus directement des récoltes et ayant subi un prétraitement de blanchiment permet le ramollissement de la membrane pectinique des fruits afin de faciliter les échanges de fluide à travers cette membrane par la suite.

Par ailleurs, un sirop de sucre est préparé; il comprend au moins un sucre tel que le saccharose ou le fructose seul ou en mélange. Tous les édulcorants peuvent être employés, y compris les polyols tels que le xylitol, le Lycasin (marque enregistrée) qui est à base de glucose hydrogéné, ou le mannitol, et les édulcorants à haut pouvoir sucrant comme l'aspartame, l'acésulfame, etc... . Dans ce dernier cas, il est nécessaire d'introduire un sucre "de charge", notamment du polydextrose.

Dans l'invention, le fructose est choisi de préférence. En effet, de par ses caractéristiques physiques, il permet au sirop d'être d'une plus grande fluidité. En outre, il présente un pouvoir sucrant plus élevé que le saccharose. Ceci évite l'addition d'autres produits sucrants et donc réduit la viscosité du sirop et en conséquence du sirop alcoolisé. L'opération de confisage en sera facilitée.

Le fructose a également pour propriété bien connue de développer les arômes et de se combiner parfaitement avec les fruits. Etant aussi anticristallisant, il évite les phénomènes de cristallisation dans le produit final et rend les fruits plus moelleux.

La concentration de sucre dans le sirop est comprise entre 15 et 45%.

Un équilibre sucre/eau est nécessaire. La teneur en sucre du sirop doit être située en dessous de 60 Brix pour éviter des phénomènes de cristallisation du sirop alcoolisé lorsqu'il sera au contact des fruits qui eux-mêmes pourront libérer du dextrose et/ou des sucres invertis.

A côté de ce sirop de sucre, un "gel d'alcool" est utilisé. Il est disponible sur le marché, et est fabriqué et commercialisé par la Société MARIE BRIZARD ET ROGER INTERNATIONAL. Il s'agit d'un alcool additionné d'un agent épaississant autre que la gomme arabique, la farine de graines de Guar, et la xanthane qui a pour inconvénient d'être filante. L'agent épaississant utilisé dans la présente invention est par exemple l'amidon ou le carboxy-méthyl-cellulose (ou C.M.C.).

L'amidon ou le C.M.C. est d'un intérêt particulier car ayant une viscosité très faible à chaud, il favorisera le phénomène d'osmose et en augmentant au contraire la viscosité à froid, il participera à la rétention du sirop à l'intérieur des fruits semi-confits, à l'issue du procédé, lorsque les fruits seront ensuite utilisés dans les préparations alimentaires.

Le gel acoolisé utilisé est par exemple de 50° alcool.

A ce gel alcoolisé, sont ajoutés les arômes souhaités, comme par exemple, la vanille, les essences de fruits, les épices (telles que la cannelle) et autres.

Le sirop de sucre est ensuite mélangé à chaud avec l'alcool comprenant le gel. Les proportions en poids du gel d'alcool et du sirop de sucre sont variables en fonction du degré alcoolique désiré et du Brix souhaité dans le produit final.

La teneur en sucre du sirop de sucre utilisé pour le sirop alcoolisé est tout à fait variable. Elle varie par exemple entre 30 et 60 Brix, et de préférence se situe approximativement autour de 40 Brix.

Le sirop alcoolisé ainsi préparé présente un degré d'alcool Gay-Lussac dans l'intervalle de 2 à 15° (2 à 15% en volume).

La présence d'alcool permet le support ou la fixation de l'arôme dans les fruits par la suite.

Une fois que les matières premières sont préparées, le procédé proprement dit selon l'invention peut débuter.

Les fruits secs ou morceaux de fruits secs, déshydratés, lyophylisés ou ayant subi un prétraitement de blanchiment, sont triés (voir étape 1 du schéma). Ils sont ensuite pesés pour un volume donné en fonction du récipient qui les contiendra. Cette opération est représentée en 2) sur le schéma et correspond au remplissage par les fruits. Selon le type de produit désiré, pour chaque série de fabrication, les fruits sont mis en quantité constante.

Les fruits ou morceaux de fruits peuvent être plus ou moins tassés dans le récipient.

Les fruits sont tassés en particulier dans le cas où une faible quantité en jus résiduel final est recherchée.

En général, les fruits remplissent approximativement complètement le récipient du fait de leur gonflement au cours du traitement à la chaleur qui suit.

Le sirop alcoolisé préparé est par la suite versé sur les fruits ou morceaux de fruit.

Le sirop alcoolisé est introduit (étape 3) à une température d'environ 30°C (plus ou moins 5°C). Le remplissage en fruits peut avoir lieu avant l'introduction du sirop alcoolisé dans le récipient ou vice versa.

La quantité de sirop alcoolisé apportée et le volume d'espace libre restant varient en fonction du gonflement des fruits souhaité.

La quantité de sirop alcoolisé en % en poids par rapport au poids total du sirop et des fruits, est dans l'intervalle de 10 à 45% et est donc bien inférieure aux quantités de sirop ou d'alcool ajoutées pour les macérations classiques de fruits. De plus, comme la quantité de sirop alcoolisé est indépendante de celle des fruits, ce procédé a pour avantage d'économiser le sirop alcoolisé en tant que matière première.

Les récipients sont ensuite fermés hermétiquement (étape 4), par exemple en les sertissant ou en les thermosoudant. Ceci évite l'évaporation de l'alcool au cours du traitement à la chaleur et supprime toute perte d'arôme.

Puis le cycle de fabrication stricto sensu se réalise. Dans un premier temps (étape 5), les récipients subissent une montée progressive en température jusqu'à 40°C. La durée minimum de l'élévation de la température est de deux heures. Ceci permet d'éviter les points de surchauffe à l'intérieur des récipients ainsi que la vaporisation d'alcool à partir du sirop. En effet, les phénomènes de surchauffe et de vaporisation d'alcool peuvent entraîner des montées rapides en pression à l'intérieur des récipients et provoquer la perte d'étanchéité des récipients ou même leur rupture.

Ensuite, les récipients sont soumis au traitement à la chaleur proprement dit, dans un intervalle pouvant varier de 40 à 100°C. Pour les températures dépassant 80°C, il est nécessaire de disposer d'un autoclave à contre pression de compensation.

A ce stade, un des trois cycles de température A, B et C, peut être suivi (étape 6 du schéma). Dans tous les cas, les dénominations utilisées dans le schéma, ont les significations suivantes:
- "osmose":: étape correspondant à l'échange entre le sirop alcoolisé et les fruits ou encore étape de confisage;
- "Past." :: étape de pasteurisation; et
- "Ster." :: étape de stérilisation.

En fonction des moyens de chauffage utilisés, un cycle donné est choisi.

Dans le cas de l'utilisation du bain-marie ou de l'étuve, les cycles A et B sont possibles.

Si la température "d'osmose" est inférieure à 65°C, l'étape de pasteurisation est nécessaire. Dans ce cas, elle a lieu avant ou après "l'osmose". Dans la pratique, la pasteurisation a plus souvent lieu après "l'osmose".

Dans ce mode de réalisation, les températures préférées de la pasteurisation se situent de 65 à 80°C. La température est choisie en fonction du degré alcool du sirop alcoolisé. Par exemple, pour un sirop de 2° alcool, le mélange sirop alcoolisé et fruits pourra être pasteurisé à 75°C. La durée de la pasteurisation varie de 1 à 3 heures.

Si la température "d'osmose" est supérieure à 65°C, l'étape de pasteurisation ultérieure n'est pas obligatoire dans le cas de fruits peu fragiles et lorsque le degré du sirop alcoolisé est moyen. En fait, la pasteurisation a lieu simultanément à l'étape "d'osmose" dans ce cas.

Enfin, dans le cas de l'utilisation d'un autoclave, les cycles C et A sont possibles. (Pour A, il faut bien sûr remplacer la pasteurisation par la stérilisation).

Le cycle C est préféré. En effet, il est plus simple de stériliser directement après la montée en température.

Dans ce mode de réalisation, les récipients sont placés dans un autoclave où ils subissent des températures plus élevées de l'ordre de 110°C, avec une contre-pression du type à air comprimé pour compenser l'augmentation rapide de pression dans l'autoclave. Ici, la stérilisation est beaucoup plus rapide: de 30 minutes environ à 1 heure 30 (voir les barèmes classiques d'unités de stérilisation). Le temps doit être suffisant pour qu'il y ait bien pénétration de la hausse de la température jusqu'au coeur du contenu des récipients.

Les fruits ou morceaux de fruits tels que les pommes, étant plus fragiles, subissent de préférence le cycle C ou A avec la stérilisation.

Au cours de l'étape "d'osmose", la température est maintenue à un palier d'au moins 40°C pendant au moins quatre heures. De préférence, la température est stabilisée entre 40 et 75°C selon la nature des fruits.

Cette étape a une durée de quatre jusqu'à 24 heures.

La température minimale de 40°C est essentielle pour rendre le sirop alcoolisé fluide. En effet, le milieu interne des fruits et le sirop alcoolisé externe doivent être à ce stade en parfaite osmose à travers la membrane des fruits. Il y a interéchange entre les deux milieux. Le sirop alcoolisé pénètre en profondeur dans les fruits et provoque leur gonflement. A ce stade, le confisage des fruits s'opère. Le fructose favorise bien la fluidité dans les échanges pendant cette étape.

Tout l'intérêt du procédé réside ici dans le choix des paramètres: quantité de sirop alcoolisé, température et temps pour contrôler directement le degré de gonflement des fruits.

Les fruits à l'issue de cette étape sont gorgés de sirop alcoolisé et sont aromatisés.

Dans l'opération "d'osmose" ou de confisage décrite ci-dessus, les récipients fermés sont de préférence agités pour favoriser les échanges entre le sirop alcoolisé et les fruits au cours du phénomène d'osmose. Cette agitation est toujours réalisée par des moyens externes aux récipients, par exemple par rotation de ces derniers. Les récipients peuvent en effet être tournés d'un demi-tour, une ou plusieurs fois (étape 7 du schéma).

Les récipients sont ensuite laissés à refroidir à l'air libre.

Le refroidissement à l'eau peut également être envisagé.

Afin de parfaire l'homogénéïsation, dans le cas de boîtes étanches du type cylindrique, celles-ci sont disposées sur un tapis incliné et roulent vers le bas par gravité ou à vitesse contrôlée à la sortie de l'étuve ou du bain-marie, (étape 10).

Dans le cas de récipients non cylindriques, la rotation se fait par retournement.

Les différents systèmes d'agitation mentionnés ci-dessus évitent la destruction des fruits car ils écartent tous les moyens mécaniques d'agitation à l'intérieur des récipients.

Concernant les récipients, les emballages métalliques étanches tels que les boîtes cylindriques de fer blanc ainsi que les bocaux en verre sont préférés car les fruits semi-confits sont préparés directement dans leur emballage ou conditionnement final. De plus, ce type de conditionnement diminue considérablement le nombre de manipulations. Par ailleurs, dans le cas des boîtes de fer blanc, elles résistent très bien à la pression provoquée par l'évaporation de l'alcool à chaud.

D'autres conditionnements peuvent être utilisés comme les emballages plastiques étanches du type sac, seau ou fût.

De préférence, dans ce dernier cas, le chauffage en autoclave est choisi avec une contre-pression pour éviter l'éclatement des récipients en plastique.

Enfin, le procédé peut être également réalisé dans des cuves de grandes dimensions, cuves spéciales tournant sur elles-mêmes. Ces cuves sont chauffées en surface, sont étanches et résistent à la pression. Mais une opération supplémentaire de conditionnement est nécessaire ainsi qu'une pasteurisation ultérieure.

A la suite du refroidissement ci-dessus, les récipients sont laissés au repos et stockés pendant au moins trois jours (étape 11 sur le schéma) afin de permettre le refroidissement final et l'homogénéïsation du produit fabriqué.

Après le refroidissement ultime des récipients, les produits finis se conservent très bien à température ambiante pendant une durée d'au moins 3 ans.

L'observation des produits finis montrent de nombreux avantages.

La quantité de jus résiduel est réglable à volonté, elle est de 5 à 18% en poids du produit consistant en fruits semi-confits et sirop. Le produit fini est très homogène, aucun cristaux de sucre ne s'est formé. Les fruits se détachent très bien les uns des autres et sont donc faciles à répartir dans les pâtes et les crèmes pour les préparations pâtissières ou la confection des crèmes glacées.

Et le principal avantage est l'absence de diffusion du sirop alcoolisé absorbé par les fruits, dans les pâtes ou les crèmes. Ceci est possible grâce à la viscosité de ce sirop provoquée par le refroidissement. De ce fait, les fruits tels quels peuvent être utilisés sans aucun risque de cristallisation ou de formation d'antigel dans les crèmes glacées. Enfin, un avantage engendré par le gonflement partiel des fruits, est leur capacité à absorber l'humidité du produit lorsqu'ils sont incorporés par exemple dans des pâtes à gâteaux.

Le produit final a une teneur moyenne en sucre de l'ordre de 50 à 70 Brix dans le cas par exemple d'un produit de raisins semi-confits préparé à partir de raisins secs.

Par analyse sensorielle, on observe que les fruits ainsi obtenus sont plus doux que les fruits macérés dans l'alcool suivant des procédés classiques. Les arômes sont bien mis en valeur en particulier dans le cas de la vanille associée par exemple à un sirop à base de rhum. L'équilibre gustatif sucre-alcool-fruits est meilleur. Les fruits ont plus de goût car ils sont en fait moins dilués comparés aux fruits obtenus dans les procédés classiques de macération. Ce type de produit peut bien sûr être consommé directement dans l'alimentation.

Globalement, le procédé selon l'invention est très intéressant car il allie des avantages technologiques dans le déroulement du procédé, gain de temps, de manipulation et de par le traitement à la chaleur associe le confisage, la fixation des arômes et la conservation du produit.

Le produit ainsi obtenu quant à lui procure des facilités d'emploi, et offre un goût étonnamment meilleur.

## Revendications

1. Procédé de fabrication de fruits semi-confits aromatisés, caractérisé en ce qu'il consiste à:
a) mélanger un sirop alcoolisé comprenant un sirop de sucre et un gel d'alcool, avec des fruits ou des morceaux de fruits dans un récipient;
b) soumettre le récipient fermé hermétiquement à une montée progressive en température jusqu'à 40°C;
c) maintenir le récipient à une température d'au moins 40°C, pendant au moins quatre heures; et
d) le cas échéant, soumettre le récipient à un traitement de pasteurisation ou de stérilisation,
les étapes c) et d) précitées pouvant être interverties.

2. Procédé selon la revendication 1, caractérisé en ce que l'étape b) a une durée d'au moins deux heures.

3. Procédé selon la revendication 1 ou 2, caractérisé en ce que lorsque la température de l'étape c) est inférieure à 65°C, l'étape d) est un traitement de pasteurisation et a une durée d'au moins une heure.

4. Procédé selon la revendication 1 ou 2, caractérisé en ce que lorsque la température de l'étape c) est supérieure à 65°C, l'étape d) n'est pas nécessaire.

5. Procédé selon la revendication 1 ou 2, caractérisé en ce qu'à l'étape d) a lieu une stérilisation et en ce qu'elle est suivie ou précédée par l'étape c).

6. Procédé selon l'une des revendications précédentes, caractérisé en ce que le sirop alcoolisé de l'étape a) est préparé en mélangeant à chaud le sirop de sucre et le gel d'alcool comprenant un agent épaississant, tel que l'amidon ou le carboxy-méthyl cellulose, et un alcool de 2 à 15% en volume (degré d'alcool Gay-Lussac 2 à 15°).

7. Procédé selon la revendication 6, caractérisé en ce que le sirop de sucre comprend du fructose.

8. Procédé selon la revendication 1, caractérisé en ce que les fruits au départ sont du type fruits secs, lyophilisés ou déshydratés ou encore des fruits ayant subi un prétraitement de blanchiment.

9. Produit à base de fruits semi-confits aromatisés obtenus selon le procédé de fabrication selon l'une des revendications 1 à 8, caractérisé en ce qu'il comprend des fruits semi-confits aromatisés dans un sirop alcoolisé dans une proportion en poids de 5 à 18% de jus résiduel par rapport au poids total des fruits et du jus.

## Patentansprüche

1. Verfahren zur Herstellung von aromatisierten halbkandierten Früchten, dadurch gekennzeichnet, dass es darin besteht :
a) einen einen Zuckersirup und ein Alkoholgel aufweisenden alkoholisierten Sirup mit Früchten oder Fruchtstücken in einem Behälter zu vermischen ;
b) den dicht verschlossenen Behälter einer allmählichen Temperatursteigerung bis 40°C zu unterwerfen ;
c) den Behälter bei einer Temperatur von wenigstens 40°C während wenigstens vier Stunden zu halten ; und
d) gegebenenfalls den Behälter einem Pasteurisierungs- oder Sterilisierungsverfahren zu unterwerfen,
wobei die vorgenannten Schritte c) und d) umgekehrt durchgeführt werden können.

2. Verfahren nach Anspruch 1, dadurch gekennzeichnet, dass der Vorgang b) eine Dauer von wenigstens zwei Stunden hat.

3. Verfahren nach Anspruch 1 oder 2, dadurch gekennzeichnet, dass, wenn die Temperatur des Schrittes c) niedriger als 65°C ist, der Schritt d) ein Pasteurisierungsverfahren ist und eine Dauer von wenisgtens einer Stunde hat.

4. Verfahren nach Anspruch 1 oder 2, dadurch gekennzeichnet, dass, wenn die Temperatur des Vorganges c) höher als 65°C ist, der Vorgang d) nicht erforderlich ist.

5. Verfahren nach Anspruch 1 oder 2, dadurch gekennzeichnet, dass während dem Schritt d) eine Sterilisierung stattfindet und dass ihm der Schritt c) folgt oder vorangeht.

6. Verfahren nach einem der vorangehenden Ansprüche, dadurch gekennzeichnet, dass der alkoholisierte Sirup des Schrittes a) vorbereitet wird, indem man den Zuckersirup und das ein Verdickungsmittel, wie Stärke oder Karboxymethylzellulose aufweisende Alkoholgel und einen Alkohol von 2 bis 15 Volumenprozent (Gay-Lussac Alkoholgrad von 2 bis 15°) warm vermischt.

7. Verfahren nach Anspruch 6, dadurch gekennzeichnet, dass der Zuckersirup Fruktose umfasst.

8. Verfahren nach Anspruch 1, dadurch gekennzeichnet, dass die Früchte am Ausgang der Gattung trockne, lyophilisierte oder entwässerte Früchte oder auch Früchte, die einem Bleichvorverfahren unterworfen worden sind, sind.

9. Erzeugnis auf Basis von nach dem Herstellungsverfahren gemäss einem der Ansprüche 1 bis 8 erhaltenen aromatisierten halbkandierten Früchten, dadurch gekennzeichnet, dass es aromatisierte halbkandierte Früchte in einem alkoholisierten Sirup mit einem Gewichtsanteil von 5 bis 18 % von Restsaft in Bezug auf das Gesamtgewicht der Früchte und des Saftes aufweist.

## Claims

1. Method of manufacture of aromatized semi-crystallized fruits, characterized in that it consists in :
a) mixing an alcoholic syrup comprising a golden syrup and an alcohol gel with fruits or pieces of fruits in a container ;
b) subjecting the tightly closed container to a gradual rise in temperature up to 40°C;
c) keeping the container at a temperature of at least 40°C for at least four hours; and
d) if need be, subjecting the container to a pasteurization or sterilization treatment ;
whereas the aforesaid steps c) and d) may be reversed.

2. Method according to claim 1, characterized in that the step b) has a duration of at least two hours.

3. Method according to claim 1 or 2, characterized in that when the temperature of the step c) is lower that 65°C, the step d) is a pasteurization process and has a duration of at least one hour.

4. Method according to claim 1 or 2, characterized in that when the temperature of the step c) is higher than 65°C, the step d) is not necessary.

5. Method according to claim 1 or 2, characterized in that at the step d) takes place a sterilization and in that it is followed or preceded by the step c).

6. Method according to one of the foregoing claims, characterized in that the alcoholic syrup of the step a) is prepared by hot mixing the golden syrup and the alcohol gel comprising a thickening agent, such as starch or carboxymethyl cellulose and an alcohol of 2 to 15% by volume (Gay-Lussac alcohol degree of from 2 to 15°).

7. Method according to claim 6, characterized in that the golden syrup comprises fructose.

8. Method according to claim 1, characterized in that the fruits at the start are of the dry, lyophilized or dehydrated fruits type or also fruits having undergone a blanching pretreatment.

9. Product based upon aromatized semi-crystallized fruits obtained with the method of manufacture according to one of claims 1 to 8, characterized in that it comprises aromatized semi-crystallized fruits in an alcoholic syrup in a weight proportion of 5 to 18% of residual juice with respect to the the total weight of the fruits and juice.
